# EUROPEAN PATENT SPECIFICATION

(11) **EP 3 838 725 B1**
(45) Date of publication and mention of the grant of the patent: **02.08.2023**
(21) Application number: 20213601.6
(22) Date of filing: 11.12.2020
(51) Int. Cl.: B62J 9/27, B62J 9/30, B62J 9/24, B62J 9/23

(54) **REMOVABLE STORAGE CONTAINER FOR SADDLE RIDING-TYPE VEHICLE**
ABNEHMBARER AUFBEWAHRUNGSBEHÄLTER FÜR EIN SATTELFAHRZEUG
RÉCIPIENT DE STOCKAGE AMOVIBLE POUR VÉHICULE DE TYPE À ENFOURCHER

(30) Priority: 20.12.2019 IT 201900024955
(43) Date of publication of application: 23.06.2021
(73) Proprietor: PIAGGIO & C. S.p.A., 56025 Pontedera (Pisa) (IT)
(72) Inventor: BARACCHINO, Luigi, 56025 Pontedera (PI) (IT); BERNARDINI, Nicola, 56025 Pontedera (PI) (IT)
(74) Representative: Carangelo, Pierluigi

(56) References cited:
- EP-A1- 1 369 344
- WO-A1-01/12496
- US-A1- 2003 150 894

## Description

### TECHNICAL FIELD OF THE INVENTION

The present invention relates to the technical sector of saddle riding-type vehicles and, in particular to a removable storage container for a saddle riding-type vehicle.

### BACKGROUND OF THE INVENTION

The application of removable storage containers on some types of saddle riding-type vehicles, such as motorcycles, in particular, but not exclusively motor scooters with two or more wheels, is known. For example, it is known to apply a storage top box on the rear part of the saddle riding-type vehicles, e.g. to allow one or more helmets to be stored in the storage top box.

The storage top boxes, commonly fixed to the rear end of motorcycles, generally comprise a container body, which defines the storage compartment, which comprises a base and a cover hinged to the base so that it can assume an opening configuration, which allows access to the storage top box, and a closing configuration, in which the cover closes the base from the top, preventing access to the storage top box. The base of the top box is normally a rigid body with a closed bottom which, as described above, is adapted to be closed at the top by the cover.

The storage top boxes are commonly used to transport objects, e.g. one or more helmets, but storage top boxes that have a more specific purpose are also known, e.g. heated or cooled thermal containers for transporting food.

A removable storage container must be reversibly fixable to the saddle riding-type vehicle so that a user can quickly remove the container whenever necessary or useful. The fixing of the storage container to the vehicle must be reliable and safe. Indeed, the possibility that the container could be undesirably removed from the vehicle, e.g. while driving, must be avoided, because, in addition to more or less problematic drawbacks, such as damage to or loss of the container or the objects contained in it, this determines a very serious road danger. Furthermore, precise measures must be taken to prevent thieves from stealing the storage container, e.g. when the vehicle is parked. For the same reasons, the closing of the storage container must also be safe and reliable, to prevent the storage container from opening unintentionally while driving and to prevent thieves from opening the storage compartment to steal the objects contained therein.

To meet the aforesaid requirements, the storage containers of the prior art comprise integrated closing/opening and fixing/removing systems which are very complex and, therefore, expensive. Furthermore, in some cases, such known integrated systems can certainly be improved in terms of practicality of use.

Examples of storage containers comprising integrated closing/opening and fixing/removing systems are described in patent applications WO2009101470A1, WO2012052919A1, WO2001012496A1, which discloses all the features of the preamble of independent claim 1, and US2003/150894A1.

It is a general object of the present description to provide a removable storage container for saddle riding-type vehicles which can solve the aforesaid drawbacks completely or at least in part.

Such an object is achieved by means of a removable storage container for saddle riding-type vehicle, as defined in general in claim 1. Preferred and advantageous embodiments of the aforesaid storage container are defined in the accompanying dependent claims.

The invention will be better understood from the following detailed description of particular embodiments, provided by way of example and therefore not limiting in any manner, with reference to the accompanying drawings which are briefly described in the following section.

### BRIEF DESCRIPTION OF THE DRAWINGS

Figure 1 shows a side plan view of a motorcycle comprising a non-limiting example of an embodiment of a removable storage container.
Figure 2 shows a diagrammatic side view of a tail portion of the motorcycle shown in figure 1 to which the storage container is operatively coupled, some parts of the container being shown in section so that a system for opening/closing the storage container and fixing/removing the storage container to/from the vehicle is visible.
Figure 3 shows a side view of the opening/closing and fixing/removing system in figure 2, in which said system is shown in a first operating configuration.
Figure 4 shows a front view of the opening/closing and fixing/removing system, in which the system is in the first operating configuration.
Figure 5 shows a side view of the opening/closing and fixing/removing system in figure 2, in which said system is shown in a second operating configuration.
Figure 6 shows a front view of the opening/closing and fixing/removing system, in which the system is shown in the second operating configuration.
Figure 7 shows a side view of the opening/closing and fixing/removing system, in which said system is shown in a third operating configuration.
Figure 8 shows a front view of the opening/closing and fixing/removing system, wherein the system is in the third operating configuration.
Figure 9 shows a side view of a further embodiment of the opening/closing and fixing/removing system of the storage container.
Figure 10 shows a perspective view of the embodiment of figure 9 of the opening/closing and fixing/removing system.

### DETAILED DESCRIPTION

Similar or equivalent elements in the accompanying figures are indicated using the same reference numerals.

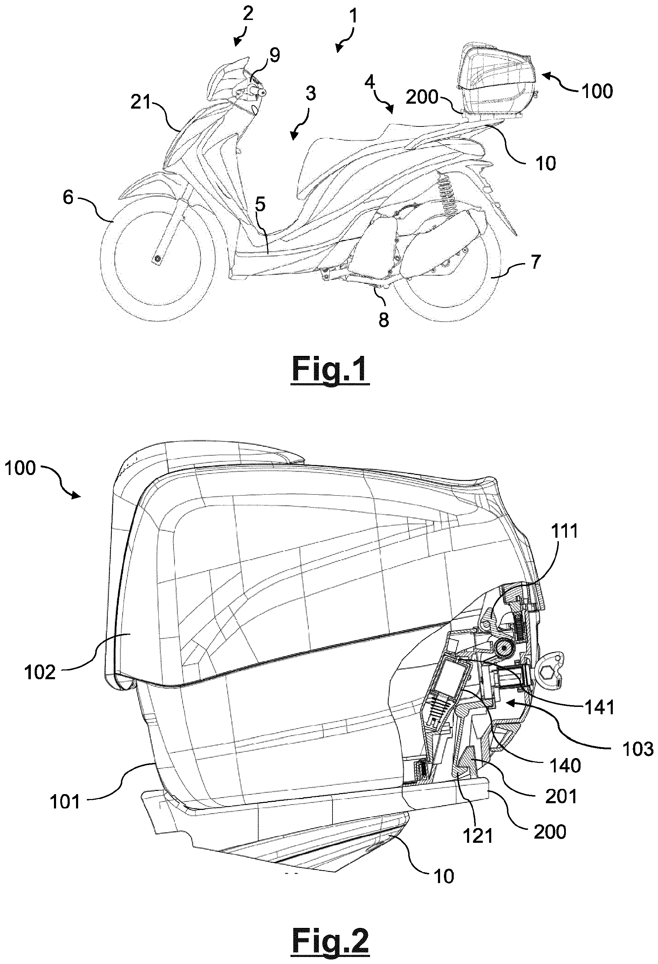

Figure 1 shows an embodiment of a saddle riding-type vehicle 1, which in the particular example, without because of this introducing any limitation, consists of a two-wheel motorcycle, and in particular of a two-wheel scooter, having a front wheel 6 and a rear wheel 7.

Hereinafter in the present description, without because of this introducing any limitation, reference will be made to a generic motorcycle 1, thereby meaning the following description may apply in general to any type of saddle riding-type vehicle comprising:
- a main body 2,3,4:
- at least two wheels 6,7 constrained to the main body 2,3,4;
- a motor 8, e.g. thermal or electric or hybrid motor, constrained to the main body 2,3,4 and operatively connected, either directly or indirectly, to at least one of the two wheels 6,7.

The main body 2,3,4 of the motorcycle 1 has a front part 2, a tail part 4, and a central part 3 interposed between the front part 2 and the tail part 4. The central part 3 comprises, for example, a footboard 5.

In the example, the front part 2 comprises a front shield 21, a steering handlebar 9, the front wheel 6.

According to a preferred and non-limiting embodiment, the tail part comprises a luggage carrier 10.

The motorcycle 1 further comprises a storage container 100 preferably and not limitedly fixed to the tail part 4 of the motorcycle 1 and more preferably to the luggage rack 10 of the motorcycle 1.

The storage container 100 comprises a container body 101, 102, which defines at least one containing compartment and which is adapted to be opened and closed to either allow or prevent access to the containing compartment, respectively. For example, the storage container 100 comprises a base 101 and a cover 102 hinged to the base 101 so that it can assume an opening configuration, which allows access to the storage compartment, and a closing configuration, in which the cover 102 closes the base 101 preventing access to the storage compartment. For example, the container body 101, 102 is shaped like a top case and the cover 102 closes the base 101 at the top.

According to a first embodiment, the storage container 100 comprises a fixing base 200, e.g. a fixing plate, adapted and configured to fix the storage container 100 to the luggage carrier 10 of the motorcycle 1 in a removable manner. In a manner known in itself, the aforesaid fixing base 200 may be mechanically coupled to the luggage carrier 10 of the motorcycle 1 by means of a tamperproof fixing system, e.g. a system of screws or bolts which are not accessible to be unscrewed or removed or released when the storage container 100 is fixed to the fixing base 200.

According to an alternative embodiment, the storage container 100 is fixed directly to the luggage carrier 10 of the motorcycle 1, i.e. without the provision of the fixing base 200.

The storage compartment comprises a system 103 for closing/opening the container body 101,102 and for fixing/removing the container body 101,102 to/from the motorcycle 1. "closing/opening" means "closing and opening" and "fixing/removing" means "fixing and removing". Hereinafter, for the sake of simplicity, the closing/opening system 103 of the container body 101,102 and for fixing/removing the container body 101,102 to/from the motorcycle 1 will also be named integrated system 103 in short.

The integrated system 103 comprises a locking element 110, adapted to be moved to assume a first and second operating position to prevent and allow the container body to be opened 101,102, respectively.

For example, the locking element 110 comprises a first latch 111, preferably hook-shaped, and the integrated system 103 comprises a first retaining element 104, e.g. a retaining pin, a retaining protrusion, or a retaining recess. In the first operating position, the first latch 111 is engaged with the first retaining element 104 to prevent the opening of the container body 101,102. In the second operating position, the first latch 111 is disengaged from the first retaining element 104 and thus allows the opening of the container body 101,102. For example, the first latch 111 is constrained to the base 101 and the first retaining element is constrained to the cover 102 or integrated into the cover 102.

The integrated system 103 further comprises a fixing element 120, adapted to be moved to assume a first and second operating position to prevent and allow the removal of the container body 101,102 from and to the motorcycle 1, respectively.

For example, the fixing element 120 comprises a second latch 121. The motorcycle 1, and in particular the luggage carrier 10 or the fixing base 200, comprises a second retaining element 201, e.g. a retaining pin, or a retaining protrusion, or a retaining recess. In the first operating position, the second latch 121 is engaged with the second retaining element 201 to prevent the removal of the container body 101,102 from the motorcycle 1. In the second operating position, the second latch 121 is disengaged from the second retaining element 201 and thus allows the removal of the container body 101,102 from the motorcycle 1, in particular from the luggage carrier 10 or the fixing base 200. In the particular example shown in the figures, the second latch 121 either is or comprises a bar having a recess 124 and the second retaining element 201 comprises a tooth integral with the fixing base 200 or with the luggage carrier 10 of the motorcycle 1. In the first operating position of the fixing element 121, the tooth is engaged inside the recess 124 to prevent the removal of the container body 101,102 from the motorcycle 1.

According to an advantageous embodiment, the second latch 121 is constrained to the base 101 of the storage container 100 and the second retaining element 201 is constrained to the luggage carrier 10 or the fixing base 200 or is integrated into the luggage carrier 10 or the fixing base 200.

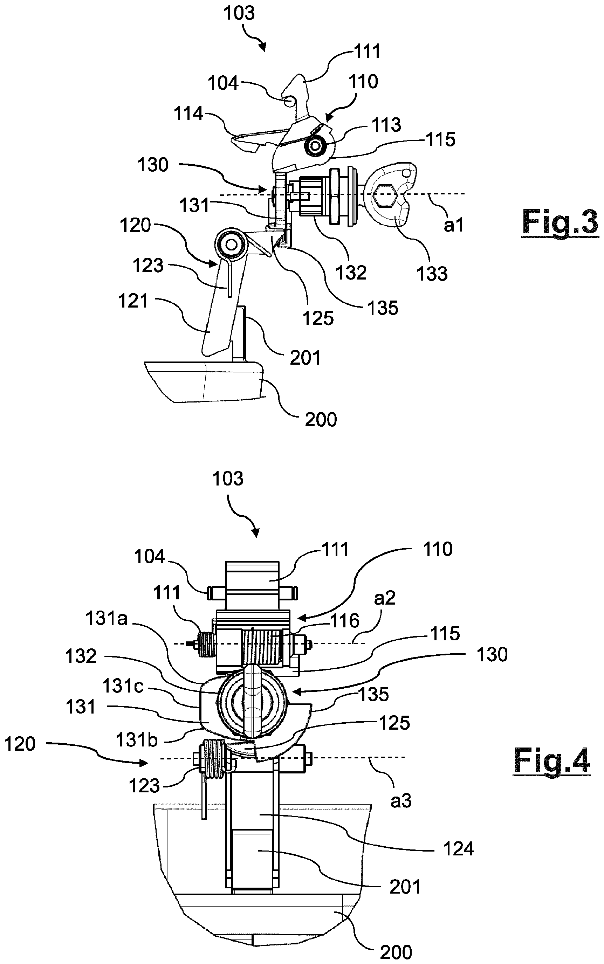

In the configuration of the integrated system 103 shown in figures 3 and 4, the locking element 110 is shown in the first operating position, i.e. in the operating position in which it prevents the opening of the container body 101, 102. Furthermore, in the configuration of the integrated system 103 shown in figures 3 and 4, the fixing element 120 is shown in the first operating position, i.e. in the operating position in which it prevents the removal of the container body 101, 102 from the motorcycle 1.

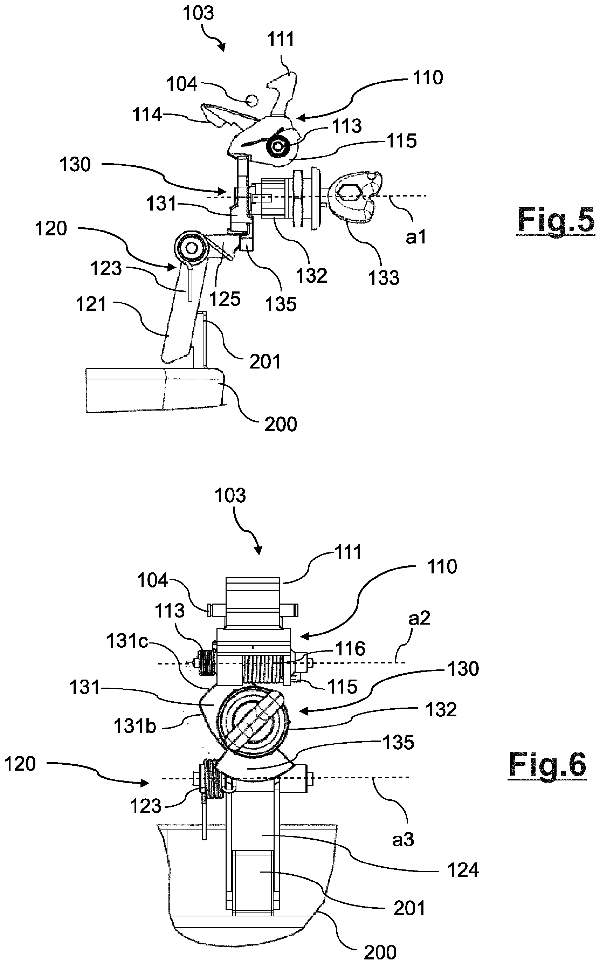

In the configuration of the system 103 shown in figures 5 and 6, the locking element 110 is shown in the second operating position, i.e. in the operating position in which it allows the opening of the container body 101, 102. Furthermore, in the configuration of the integrated system 103 shown in figures 5 and 6, the fixing element 120 is shown in the first operating position, i.e. in the operating position in which it prevents the removal of the container body 101, 102 from the motorcycle 1.

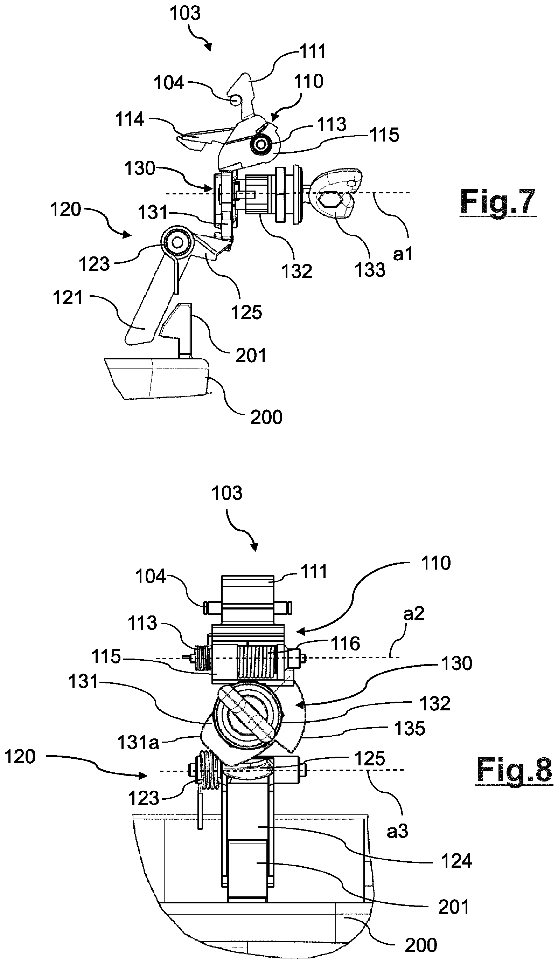

Finally, in the configuration of the integrated system 103 shown in figures 7 and 8, the locking element 110 is shown in the first operating position, i.e. in the operating position in which it prevents the opening of the container body 101, 102. Furthermore, in the configuration of the integrated system 103 shown in figures 7 and 8, the fixing element 121 is shown in the second operating position, i.e. in the operating position in which it allows the removal of the container body 101, 102 from the motorcycle 1.

The system 103 for closing/opening the container body 101, 102 and for fixing/removing the container body 101, 102 to/from the motorcycle 1 further comprises an actuating member 130 which, relative to an initial position, can be moved in a first direction and a second direction opposite to each other. A movement of the actuating member 130 from the initial position in the first direction causes a movement of the locking element 110 from the first towards the second operating position. A movement of the actuating member 130 from the initial position in the first direction causes a movement of the fixing element 110 from the first towards the second operating position. Preferably, the initial position of the actuating member 130 is a resting position.

Figures 3 and 4 show, for example, the actuating member 130 in the initial position. Figures 5 and 6 show, for example, the actuating member 130 after the movement in the first direction from the initial position. Finally, figures 7 and 8 show, for example, the actuating member 130 after the movement in the second direction from the initial position.

According to an advantageous embodiment, the actuating member 130 is rotatable about a first rotation axis a1. According to an advantageous embodiment, which can be adopted either jointly with or alternately to the first embodiment described above, the locking element 110 is rotatable about a second rotation axis a2 and the locking element 120 can be rotated around a third rotation axis a3. The second rotation axis a2 and the second rotation axis a3 are parallel to each other. Furthermore, it is particularly advantageous to provide that the first rotation axis a1 is perpendicular to the second rotation axis a2 and the third rotation axis a3. However, it is worth noting that in alternative embodiments, the locking element 110 and the fixing element 120 could translate along a respective sliding axis or rototranslate instead of simply rotating. Furthermore, the actuating member 130 could also translate along a respective sliding axis or rototranslate instead of simply rotating.

Conveniently, the opening/closing and fixing/removing system 103 comprises a first elastic return element 113 and a second elastic return element 123 configured to return the locking element 110 and the fixing element 120 to their first operating position, respectively. For example, the first elastic return element 103 either is or comprises a helical spring. For example, the second elastic return element 123 either is or comprises a helical spring.

In the embodiment in which the actuating member 130 is rotational about a first rotation axis a1, it is particularly advantageous to provide that the actuating member 130 comprises a radially protruding thrust element 131 which in the movement, or rather the rotation, of the actuating member 130 from the initial position to the first direction pushes the locking element 110 and in the movement, or rather the rotation, of the actuating member 130 from the initial position in the second direction pushes the fixing element 120. In this manner, a user starting from the initial position of the actuating member 130 by rotating the actuating member 130 in one direction can allow the opening of the container body 101,102 and by rotating the actuating member 130 in the opposite direction can allow the removal of the container body 101,102 from the motorcycle 1.

Preferably, the actuating member 130 has at least one side contact surface 131a, 131b, which either abuts or is adapted to enter into abutment with the locking element 110 and the fixing element 120. Advantageously said at least one side contact surface 131a, 131b is a curved surface.

According to an advantageous embodiment, the actuating member 130 comprises two side contact surfaces 131a, 131b opposed to each other and respectively either abuts or is adapted to enter into abutment with the fixing element 110 and with the locking element 120. Advantageously, the two side contact surfaces 131a, 131b are curved surfaces. Preferably, a flat or almost flat 131c surface is interposed between said curved side contact surfaces 131a, 131b.

The actuating member 130 comprises a stop element 135 which in the initial position of the actuating member 130 prevents the fixing element 120 from assuming the second operating position, and this occurs more preferably also in presence of external forces. This expedient is particularly advantageous because, on the one hand, it prevents an unintentional detachment of the container body 101,102 from the motorcycle 1, e.g. due to a jolt of the motorcycle 1 on a bumpy road surface, and, on the other hand, it prevents thieves from intentionally removing the container body 101,102 from the motorcycle 1, e.g. by using a tool which allows them to push or in any event move the fixing element 120 from the first operating position to the second operating position.

According to a preferred embodiment, in general, consistent with the example shown in the appended figures, the stop element 135 is a radially projecting element and is angularly spaced apart from the radially projecting thrust element 131.

The stop element 135 is configured so that the locking element 110 and the fixing element 120 cannot assume the second operating position at the same time.

According to a particularly advantageous embodiment, the stop element 135 is L-shaped along at least one plane of the longitudinal section. A longitudinal section plane, in this case, means a plane passing through the first rotation axis a1. Either additionally or alternatively, it is advantageous for the stop element 135 to be arch-shaped along at least one cross section. Cross-section plane, in this case, means a cross-section plane perpendicular to the first rotation axis a1.

According to an embodiment, the fixing element 120 comprises a contact portion 125 which either abuts or is adapted to enter into abutment with the actuating member 130.

According to a particularly advantageous embodiment, the contact portion 125 comprises at least one curved contact surface.

According to an embodiment, the contact portion 125 either abuts or is adapted to enter into abutment:
- with the radially protruding thrust element 131 in the movement of the actuating member 130 from the initial position along the second direction;
- with the stop element 135 during the stay of the actuating member 130 is in the initial position and the movement of the actuating member 130 from the initial position along the first direction.

The opening/closing and fixing/removing system 103 further comprise a lock 132 with key 133, wherein the lock 132 is connected in an operating manner to the actuating member 130. In this manner, by rotating the key 133 of the lock 132 in opposite directions, it is possible to start from the initial position and turn the actuating member 130 in the first and second opposite directions.

The stop element 135, in contrast with the prior art, is actuated by means of the lock 132 and in particular by means of the key 133.

According to a particularly advantageous embodiment, the integrated system 103 comprises safety means adapted to reduce the risk of incorrect operation of the integrated system 103. Such safety means comprise, for example, means adapted to diversify the inertia of the actuating member 130 according to whether an attempt is made to move the actuating member 130 in the first or second direction, and in particular to increase the inertia of the movement of the actuating member 130 along at least one stretch of its travel in the movement from its initial position in the second direction. For example, said safety means comprise a yielding shoulder, e.g. a movable shoulder in contrast to an elastic element such as a spring, e.g. a coil spring. Therefore, a user who is about to move the actuating member 130 in the second direction, e.g. by acting on the key 133, will feel a greater resistance and sense the right direction to operate the actuating member 130 according to whether he or she desires to open the containment body 101, 102 or remove the container body 101, 102 from the motorcycle 1.

According to an advantageous embodiment, the integrated system 103 comprises controllable actuator 140, configured to receive a control signal, which is connected in an operating manner to the locking element 110 to move the locking element 110. For example, the controllable actuator 140 is an electromagnetic actuator. For example, the aforesaid controllable actuator 140 allows to move, e.g. rotate, the latch 111. In the particular example of the figures, the aforesaid actuator 140 can be controlled to make a piston 141 slide along a sliding direction to rotate the latch 111. The controllable actuator 140 can be powered by an energy source inside the container body 101,102, e.g. by a preferably rechargeable battery housed in the container body 101,102 or by an external energy source, e.g. by energy taken from the electrical system of the motorcycle 1. The actuator 140 can be controlled by a radio signal and/or a manual control device provided on an external wall of the housing 101,102, or by a manual control device provided aboard the motorcycle 1, e.g. on the front 2, e.g. on the steering handlebars 9. The aforesaid manual control device comprises, for example, a switch, in particular a pushbutton switch.

The aforesaid controllable actuator 140 can interact either directly or indirectly with the first latch 111.

For example, in the case of direct interaction, the piston 141 of the controllable actuator 140 is adapted and configured to move the first latch 111 directly, e.g. by pushing it.

For example, in the case of indirect interaction, the locking element 110 comprises a transmission element 114, e.g. arm 114, operatively connected to the first latch 111 through a rotor 115.

According to a first embodiment, the arm 114 is moved in rotation by the piston 140 and the rotor 115 and the first latch 111 are integral in rotation with the arm 114.

According to an alternative, particularly advantageous embodiment, the arm 114 is hinged to the rotor 115, so the relative rotation is possible between the arm 114 and the rotor 115. The first latch 111 is rigidly fixed to the rotor 115. An elastic element 116, e.g. a spring, is interposed in an operating manner between the arm 114 and the rotor 115. It is possible to provide that in operation the piston 140 pushes the arm 144 to store elastic energy in the elastic element 116, e.g. by subjecting it to torsion or compression. In this stage, the first latch 111, the rotor 115, and generally the locking element 110 are stationary, e.g. in the first operating position (figure 3). Once the storage of a given amount of elastic energy has been achieved, the elastic element 116 triggers the rotor 115 and the first latch 111, to release the first latch 111 from the first retaining element 104 and thus allow the opening of the container body 101, 102.

It is worth noting that besides the specific embodiment described in the previous paragraph, in the case of a controllable actuator 140, it is generally advantageous to provide an elastic energy storage element 116 which is interposed in an operating manner between the controllable actuator 140 and the locking element 110, wherein the elastic energy storage element 116 is first such as to store in the form of elastic energy the mechanical energy supplied by the controllable actuator 140 and then such as to release the stored elastic energy impulsively to move the locking element 110.

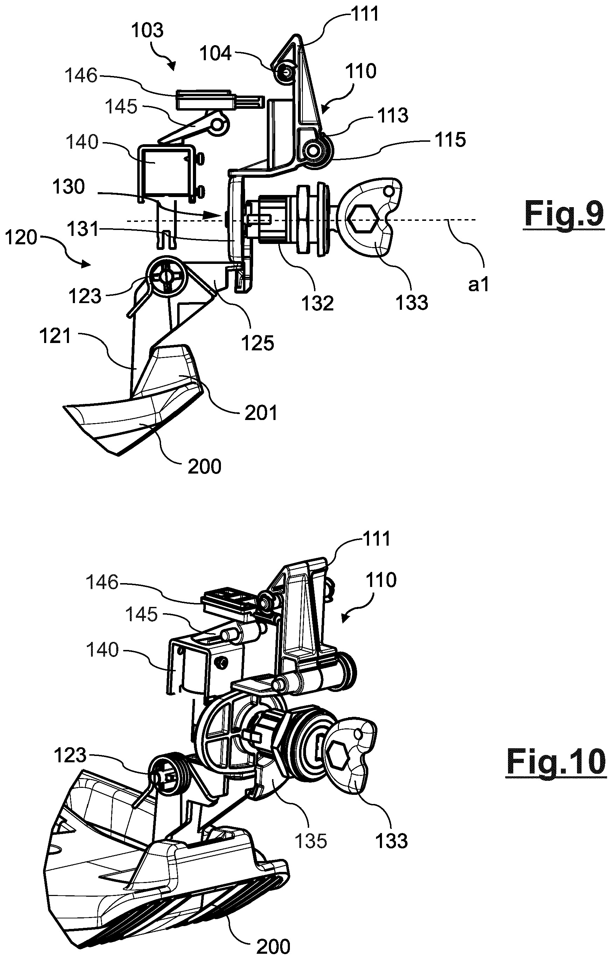

An alternative embodiment, shown in figures 9 and 10, comprises again an actuated system, wherein the controllable actuator 124 acts, for example by means of a slidable piston, on a release mechanism of the first latch 111.

In particular, said release mechanism comprises an abutment element in direct contact with the actuator 140. The abutment element 145 is rotatably coupled with a thrust element 146. The rotation of the abutment element 145 causes the axial sliding of the thrust element 146.

Therefore, by actuating the actuator 140 this performs an axial stroke which rotates the abutment element 145, which in turn causes the movement of the thrust element 146 which abuts a surface of the first latch generating a force which allows it to free itself from the retaining element 104.

In detail, the abutment element 145 is preferably an "L" shaped lever. The actuator 140 rotates the L-shaped lever, which in turn translates the thrust element 146 which imposes a rotation to the first lock 111.

On the basis of the explanation above, it is thus possible to understand how a removable storage container of the type described above allows to achieve the objects indicated above with reference to the prior art.

Notwithstanding the principle of the invention, embodiments and details may be greatly varied with respect to that described and illustrated herein exclusively by way of non-limiting example without because of this departing from the scope of protection of the invention as defined in the appended claims.

## Claims

1. A removable storage container (100) for a saddle riding-type vehicle (1), wherein the storage container (100) comprises:
- a container body (101, 102), which defines at least one containing compartment and which is adapted to be opened and closed to either allow or prevent access to the containing compartment, respectively;
- a system (103) for closing/opening the container body (101, 102) and for fixing/removing the container body (101, 102) to/from the vehicle (1);
wherein the system (103) for closing/opening the container body (101, 102) and for fixing/removing the container body (101, 102) comprises:
- a locking element (110) adapted to be moved to take a first and a second operating position to prevent and allow the opening of the container body (101,102), respectively;
- a fixing element (120) adapted to be moved to take a first and a second operating position to prevent and allow the removal of the container body (101,102) from the saddle riding-type vehicle (1), respectively;
- an actuating member (130) which is movable in mutually opposite first direction and second direction with respect to a starting position, wherein a movement of the actuating member (130) from the starting position in the first direction causes a movement of the locking element (110) from the first operating position towards the second operating position, and wherein a movement of the actuating member (130) from the starting position in the second direction causes a movement of the fixing element (120) from the first operating position towards the second operating position;
wherein:
- the actuating member (130) comprises a stop element (135) which, in the starting position of the actuating member (130), prevents the fixing element (120) from taking the second operating position;
- the stop element (135) is configured so that the locking element (110) and the fixing element (120) cannot take the second operating position at the same time;
- the opening/closing and fixing/removing system (103) further comprises a lock (132) with a key (133), wherein said lock (132) is operatively connected to the actuating member (130); and **characterised in that**
- the stop element (135) is actuated by means of the lock (132) and in particular by means of the key (133).

2. A storage container (100) according to claim 1, wherein the actuating member (130) is rotatable about a first rotation axis (a1).

3. A storage container (100) according to claim 1 or 2, wherein the locking element (110) is rotatable about a second rotation axis (a2) and the fixing element (120) is rotatable about a third rotation axis (a3), the second rotation axis (a2) and the third rotation axis (a3) being mutually parallel.

4. A storage container (100) according to claims 2 and 3, wherein the first rotation axis (a1) is perpendicular to the second rotation axis (a2) and to the third rotation axis (a3).

5. A storage container (100) according to any one of the preceding claims, wherein the opening/closing and fixing/removing system (103) comprises a first elastic return element (113) and a second elastic return element (123) configured to return the locking element (110) and the fixing element (120), respectively, to their first operating position.

6. A storage container (100) according to any one of the preceding claims, wherein the actuating member (130) comprises a radially protruding thrust element (131) which, when the actuating member (130) moves from the starting position in the first direction, pushes the locking element (110), and when the actuating member (130) moves from the starting position in the second direction, pushes the fixing element (120).

7. A storage container (100) according to claim 6, wherein the stop element (135) is a radially protruding element angularly spaced apart from said radially protruding thrust element (131).

8. A storage container (100) according to any one of the preceding claims, wherein said system (103) comprises an actuator (140) configured to receive a control signal, which is operatively connected to the locking element (110) to move the locking element (110).

9. A storage container (100) according to any one of the preceding claims, wherein the container body (101, 102) comprises a base (101) and a cover (102) hinged to the base (101) to rotate from a closing position to an opening position and vice versa, and wherein the fixing element (120) is constrained to the base (101) and allows the base (101) to be fixed to the vehicle (1), and wherein the locking element (110) is constrained to the base (101) and allows the cover (102) to be locked in the closing position.

10. A storage container (100) according to any one of the preceding claims, comprising a fixing base (200), said fixing base (200) being attachable to a saddle riding-type vehicle (1) to allow the storage container (100) to be fixed to the vehicle (1), said fixing element (120) being such as to be engaged with said fixing base (200).

11. A saddle riding-type vehicle (1) comprising a luggage rack (10) and a storage container (100) according to any one of the preceding claims, wherein the storage container (100) is adapted and configured to be fixed to the luggage rack (10) by means of said fixing element (120).

## Patentansprüche

1. Abnehmbarer Aufbewahrungsbehälter (100) für ein Sattelfahrzeug (1), wobei der Aufbewahrungsbehälter (100) umfasst:
- einen Behälterkörper (101, 102), der mindestens ein Aufnahmefach definiert und der so ausgebildet ist, dass er geöffnet und geschlossen werden kann, um den Zugang zu dem Aufnahmefach zu ermöglichen bzw. zu verhindern;
- ein System (103) zum Schließen/Öffnen des Behälterkörpers (101, 102) und zum Befestigen/Entfernen des Behälterkörpers (101, 102) an/von dem Fahrzeug (1);
wobei das System (103) zum Schließen/Öffnen des Behälterkörpers (101, 102) und zum Befestigen/Entfernen des Behälterkörpers (101, 102) umfasst:
- ein Verschlusselement (110), das bewegt werden kann, um eine erste und eine zweite Bedienposition einzunehmen, um das Öffnen des Behälterkörpers (101, 102) zu verhindern bzw. zu ermöglichen;
- ein Befestigungselement (120), das so ausgebildet ist, dass es eine erste und eine zweite Bedienposition einnehmen kann, um das Entfernen des Behälterkörpers (101, 102) von dem Sattelfahrzeug (1) zu verhindern bzw. zu ermöglichen;
- ein Betätigungselement (130), das in einer ersten Richtung und einer zweiten Richtung, die einander entgegengesetzt sind, in Bezug auf eine Ausgangsposition bewegbar ist, wobei eine Bewegung des Betätigungselements (130) aus der Ausgangsposition in der ersten Richtung eine Bewegung des Verschlusselements (110) aus der ersten Bedienposition in Richtung der zweiten Bedienposition bewirkt und wobei eine Bewegung des Betätigungselements (130) aus der Ausgangsposition in der zweiten Richtung eine Bewegung des Befestigungselements (120) aus der ersten Bedienposition in Richtung der zweiten Bedienposition bewirkt;
wobei:
- das Betätigungselement (130) ein Anschlagelement (135) umfasst, das in der Ausgangsposition des Betätigungselements (130) verhindert, dass das Befestigungselement (120) die zweite Bedienposition einnimmt;
- das Anschlagelement (135) so konfiguriert ist, dass das Verschlusselement (110) und das Befestigungselement (120) nicht gleichzeitig die zweite Bedienposition entnehmen können;
- das System (103) zum Öffnen/Schließen und Befestigen/Entfernen ferner ein Schloss (132) mit einem Schlüssel (133) umfasst, wobei das Schloss (132) funktionsmäßig mit dem Betätigungselement (130) verbunden ist; und **dadurch gekennzeichnet, dass**
- das Anschlagelement (135) mittels des Schlosses (132) und insbesondere mittels des Schlüssels (133) betätigt wird.

2. Aufbewahrungsbehälter (100) nach Anspruch 1, wobei das Betätigungselement (130) um eine erste Drehachse (a1) drehbar ist.

3. Aufbewahrungsbehälter (100) nach Anspruch 1 oder 2, wobei das Verschlusselement (110) um eine zweite Drehachse (a2) und das Befestigungselement (120) um eine dritte Drehachse (a3) drehbar sind, wobei die zweite Drehachse (a2) und die dritte Drehachse (a3) zueinander parallel sind.

4. Aufbewahrungsbehälter (100) nach einem der Ansprüche 2 und 3, wobei die erste Drehachse (a1) senkrecht zu der zweiten Drehachse (a2) und zu der dritten Drehachse (a3) ist.

5. Aufbewahrungsbehälter (100) nach einem der vorhergehenden Ansprüche, wobei das System (103) zum Öffnen/Schließen und Befestigen/Entfernen ein erstes elastisches Rückstellelement (113) und ein zweites elastisches Rückstellelement (123) umfasst, die so konfiguriert sind, dass sie das Verschlusselement (110) bzw. das Befestigungselement (120) in ihre erste Bedienposition zurückbringen.

6. Aufbewahrungsbehälter (100) nach einem der vorhergehenden Ansprüche, wobei das Betätigungselement (130) ein radial vorstehendes Schubelement (131) umfasst, das, wenn sich das Betätigungselement (130) aus der Ausgangsposition in die erste Richtung bewegt, auf das Verschlusselement (110) drückt, und wenn sich das Betätigungselement (130) aus der Ausgangsposition in die zweite Richtung bewegt, auf das Befestigungselement (120) drückt.

7. Aufbewahrungsbehälter (100) nach Anspruch 6, wobei das Anschlagelement (135) ein radial vorstehendes Element ist, das winklig von dem radial vorstehenden Schubelement (131) entfernt angeordnet ist.

8. Aufbewahrungsbehälter (100) nach einem der vorhergehenden Ansprüche, wobei das System (103) einen Aktuator (140) umfasst, der so konfiguriert ist, dass er ein Steuersignal empfängt, das funktionsmäßig mit dem Verschlusselement (110) verbunden ist, um das Verschlusselement (110) zu bewegen.

9. Aufbewahrungsbehälter (100) nach einem der vorhergehenden Ansprüche, wobei der Behälterkörper (101, 102) ein Unterteil (101) und einen Deckel (102) umfasst, der an dem Unterteil (101) angelenkt ist, um sich von einer Schließposition in eine Öffnungsposition und umgekehrt zu drehen, und wobei das Befestigungselement (120) an dem Unterteil (101) befestigt ist und es ermöglicht, dass das Unterteil (101) an dem Fahrzeug (1) befestigt wird, und wobei das Verschlusselement (110) an dem Unterteil (101) befestigt ist und es ermöglicht, dass der Deckel (102) in der Schließposition verriegelt wird.

10. Aufbewahrungsbehälter (100) nach einem der vorhergehenden Ansprüche, umfassend ein Befestigungsunterteil (200), wobei das Befestigungsunterteil (200) an einem Sattelfahrzeug (1) anbringbar ist, um die Befestigung des Aufbewahrungsbehälters (100) an dem Fahrzeug (1) zu ermöglichen, wobei das Befestigungselement (120) gestaltet ist, um mit dem Befestigungsunterteil (200) in Eingriff zu werden.

11. Sattelfahrzeug (1), umfassend eine Gepäckablage (10) und einen Aufbewahrungsbehälter (100) nach einem der vorhergehenden Ansprüche, wobei der Aufbewahrungsbehälter (100) gestaltet und konfiguriert ist, dass er mit Hilfe des Befestigungselements (120) an der Gepäckablage (10) befestigt zu werden.

## Revendications

1. Récipient de stockage amovible (100) pour un véhicule de type à enfourcher (1), le récipient de stockage (100) comprenant :
- un corps de récipient (101, 102) qui définit au moins un compartiment de contenant et qui est adapté pour être ouvert et fermé pour respectivement permettre ou empêcher l'accès au compartiment de contenant ;
- un système (103) pour fermer/ouvrir le corps de récipient (101, 102) et pour fixer/retirer le corps de récipient (101, 102) sur/du véhicule (1) ;
dans lequel le système (103) pour fermer/ouvrir le corps de récipient (101, 102) et pour fixer/retirer le corps de récipient (101, 102) comprend :
- un élément de verrouillage (110) adapté pour être déplacé afin de prendre une première et une seconde position de fonctionnement pour respectivement empêcher et permettre l'ouverture du corps de récipient (101, 102) ;
- un élément de fixation (120) adapté pour être déplacé afin de prendre une première et une seconde position de fonctionnement pour respectivement empêcher et permettre le retrait du corps de récipient (101, 102) du véhicule de type à enfourcher (1) ;
- un organe d'actionnement (130) qui est mobile dans une première direction et une seconde direction opposées entre elles par rapport à une position de départ, dans lequel un déplacement de l'organe d'actionnement (130), à partir de la position de départ dans la première direction, provoque un déplacement de l'élément de verrouillage (110), de la première position de fonctionnement vers la seconde position de fonctionnement, et dans lequel un déplacement de l'organe d'actionnement (130), de la position de départ dans la seconde direction, provoque un déplacement de l'élément de fixation (120), de la première position de fonctionnement vers la seconde position de fonctionnement ;
dans lequel :
- l'organe d'actionnement (130) comprend un élément de butée (135) qui, dans la position de départ de l'organe d'actionnement (130), empêche l'élément de fixation (120) de prendre la seconde position de fonctionnement ;
- l'élément de butée (135) est conçu pour que l'élément de verrouillage (110) et l'élément de fixation (120) ne puissent pas prendre la seconde position de fonctionnement en même temps ;
- le système d'ouverture/fermeture et de fixation/retrait (103) comprend en outre un verrou (132) avec une clé (133), dans lequel ledit verrou (132) est relié fonctionnellement à l'organe d'actionnement (130) ; et **caractérisé en ce que**
- l'élément de butée (135) est actionné au moyen du verrou (132) et en particulier au moyen de la clé (133).

2. Récipient de stockage (100) selon la revendication 1, dans lequel l'organe d'actionnement (130) peut tourner autour d'un premier axe de rotation (a1).

3. Récipient de stockage (100) selon la revendication 1 ou 2, dans lequel l'élément de verrouillage (110) peut tourner autour d'un deuxième axe de rotation (a2) et l'élément de fixation (120) peut tourner autour d'un troisième axe de rotation (a3), le deuxième axe de rotation (a2) et le troisième axe de rotation (a3) étant parallèles entre eux.

4. Récipient de stockage (100) selon les revendications 2 et 3, dans lequel le premier axe de rotation (a1) est perpendiculaire au deuxième axe de rotation (a2) et au troisième axe de rotation (a3).

5. Récipient de stockage (100) selon l'une quelconque des revendications précédentes, dans lequel le système d'ouverture/fermeture et de fixation/retrait (103) comprend un premier élément de rappel élastique (113) et un second élément de rappel élastique (123) conçus pour rappeler respectivement l'élément de verrouillage (110) et l'élément de fixation (120) dans leur première position de fonctionnement.

6. Récipient de stockage (100) selon l'une quelconque des revendications précédentes, dans lequel l'organe d'actionnement (130) comprend un élément de poussée (131) faisant saillie radialement qui, lorsque l'organe d'actionnement (130) se déplace à partir de la position de départ dans la première direction, pousse l'élément de verrouillage (110), et lorsque l'organe d'actionnement (130) se déplace à partir de la position de départ dans la seconde direction, pousse l'élément de fixation (120).

7. Récipient de stockage (100) selon la revendication 6, dans lequel l'élément de butée (135) est un élément faisant saillie radialement angulairement espacé dudit élément de poussée (131) faisant saillie radialement.

8. Récipient de stockage (100) selon l'une quelconque des revendications précédentes, dans lequel ledit système (103) comprend un actionneur (140) conçu pour recevoir un signal de commande, qui est fonctionnellement connecté à l'élément de verrouillage (110) pour déplacer l'élément de verrouillage (110).

9. Récipient de stockage (100) selon l'une quelconque des revendications précédentes, dans lequel le corps de récipient (101, 102) comprend une base (101) et un couvercle (102) articulé sur la base (101) pour tourner d'une position de fermeture à une position d'ouverture et inversement et dans lequel l'élément de fixation (120) est contraint sur la base (101) et permet de fixer la base (101) sur le véhicule (1) et dans lequel l'élément de verrouillage (110) est contraint sur la base (101) et permet de verrouiller le couvercle (102) en position de fermeture.

10. Récipient de stockage (100) selon l'une quelconque des revendications précédentes, comprenant une base de fixation (200), ladite base de fixation (200) pouvant être attachée à un véhicule de type à enfourcher (1) pour permettre de fixer le récipient de stockage (100) au véhicule (1), ledit élément de fixation (120) étant tel qu'il est en prise avec ladite base de fixation (200).

11. Véhicule de type à enfourcher (1) comprenant un porte-bagages (10) et un récipient de stockage (100) selon l'une quelconque des revendications précédentes, dans lequel le récipient de stockage (100) est adapté et conçu pour être fixé au porte-bagages (10) au moyen dudit élément de fixation (120).
